## Europäisches Patentamt

## European Patent Office

## Office européen des brevets

(19)

(11) Veröffentlichungsnummer: **0 166 176**
**B1**

(12)

# EUROPÄISCHE PATENTSCHRIFT

(45) Veröffentlichungstag der Patentschrift:
**13.07.88**

(51) Int. Cl.⁴: **F 16 D 13/02,** F 16 D 13/08

(21) Anmeldenummer: **85106069.9**

(22) Anmeldetag: **17.05.85**

(54) **Schlingfeder-Kupplung.**

(30) Priorität: **06.06.84 CH 2742/84**

(43) Veröffentlichungstag der Anmeldung:
**02.01.86 Patentblatt 86/1**

(45) Bekanntmachung des Hinweises auf die Patenterteilung:
**13.07.88 Patentblatt 88/28**

(84) Benannte Vertragsstaaten:
**CH DE FR GB IT LI NL**

(56) Entgegenhaltungen:
**DE - A - 2 822 649**
**DE - A - 2 826 423**
**FR - A - 2 097 883**
**GB - A - 898 183**
**US - A - 2 829 748**

(73) Patentinhaber: **Baumann & Cie. AG, Ferrachstrasse 31,
CH-8630 Rüti (CH)**

(72) Erfinder: **Iten, Peter, Im Chramen 9, CH-8712 Stäfa (CH)**

(74) Vertreter: **Scheidegger, Zwicky, Werner & Co.,
Stampfenbachstrasse 48 Postfach, CH-8023 Zürich (CH)**

ACTORUM AG

## Beschreibung

Die Erfindung betrifft eine Schlingfeder-Kupplung der im Oberbegriff des Anspruchs 1 bezeichneten Art.

Eine Schlingfeder-Kupplung mit den im Oberbegriff genannten Merkmalen ist aus der GB-A-898 183 bekannt, jedoch handelt es sich hierbei um eine Schlingfeder-Kupplung zum Einschalten, bei der das mehrteilige Schaltorgan die Funktion einer Rutschkupplung hat, bei der während der Einschaltphase die durch den Anschlaghebel festgehaltene weitere Schlingfeder, die mit Vorspannung auf dem hülsenförmigen inneren Teil des Schaltorgans sitzt, auf diesen mit der eigentlichen Kupplungs-Schlingfeder mitdrehenden hülsenförmigen Teil ein Bremsmoment ausübt, wobei letzterer gegenüber der Schlingfeder durchrutscht und das Rutschmoment dabei genügend gross sein muss, damit das Torsionsmoment der eigentlichen Kupplungs-Schlingfeder überwunden wird, welche mit der Antriebsnabe mitdreht, mit dem hülsenförmigen Teil des Schaltorgans formschlüssig gekuppelt ist und durch das auf Grund der Bremsung gegenüber der drehenden Schlingfeder zurückbleibende hülsenförmige Teil auf die einzukuppelnde Abtriebsnabe heruntergezogen wird, wodurch das Einkuppeln zustande kommt. Infolge des Durchrutschens innerhalb des Schaltorgans entsteht Reibungshitze und Verschleiss, sodass die Einschaltphase dieser Kupplung nur beschränkt sein kann und es erforderlich macht, für eine Wärmeableitung zu sorgen. Die Schlingfeder des Schaltorgans muss daher frei liegen und kann in einer abgewandelten Ausführungsform nur an einem Federende mit einem drehbaren Ring formschlüssig gekuppelt sein, der am Umfang eine Vielzahl von Anschlagflächen aufweist, die es ermöglichen sollen, die Schlingfeder-Kupplung in einer entsprechenden Anzahl von unterschiedlichen Drehstellungen betätigen zu können.

Die vorliegende Erfindung betrifft eine Schlingfeder-Kupplung zum Ausschalten und es soll bei ihr auch die Aufgabe gelöst werden, die Betätigung in jeder beliebigen Drehstellung durchführen zu können, was in der Regel durch das Zusammenwirken eines Nocken an der sich drehenden Kupplung mit einem in die Nocken-Umlaufbahn gebrachten Anschlaghebel erfolgt.

Schlingfeder-Kupplungen dieser Art sind bekannt und werden beispielsweise für die Antriebsübertragung von häufig zu betätigenden Steuergliedern verwendet. Es sind mithin Schaltkupplungen, die in der Regel über einen elektromagnetisch betätigten Hebel und eine mit dem Hebel zusammenwirkende Nockenhülse der Kupplung aus- und eingekuppelt werden. Meistens wird beim Einsatz einer solchen Schaltkupplung gefordert, dass das angetriebene Element wie beispielsweise eine Kurvenscheibe oder ein Kurbeltrieb beim Auskuppeln in einer bestimmten Position angehalten wird. Man verlangt mit anderen Worten von einer solchen Kupplung eine repetierbare Anlauf- bzw. Stoppgenauigkeit, die insbesondere bei einer Ausführungsform mit Verwendung der Schlingfeder auch als Bremsfeder im Zusammenwirken mit einer Bremsnabe zu erreichen ist.

Da das Ein- und Ausschalten der Schlingfeder-Kupplung des eingangs genannten Typs durch das Zusammenwirken des radial vorstehenden Nockens an der umlaufenden Nockenhülse, an welcher ein Ende der Schlingfeder festgehalten ist, mit einem in die Umlaufbahn des Nockens gebrachten Hebel oder Stift erfolgt, welcher beispielsweise von einem elektrischen Hubmagneten betätigt wird, ergibt sich bei der Forderung, dass die abtriebsseitig angeordnete Kurvenscheibe oder ein entsprechendes Element in einer definierten Position angehalten werden soll, die Notwendigkeit, dass man den Nocken bezüglich seiner Drehstellung relativ zu der Kurvenscheibe oder einem entsprechenden Element beliebig einstellen kann. Zu diesem Zweck ist es beispielsweise bekannt, auf der Abtriebsnabe einen Einstellring anzuordnen, in dem das eine Ende der Schlingfeder formschlüssig fixiert ist, von welcher Schlingfeder das andere Federende an der die Schlingfeder umschliessenden Nockenhülse formschlüssig festgehalten ist. Der Einstellring ist mit Hilfe mehrerer Gewindestifte kraftschlüssig mit der Abtriebsnabe verbunden, so dass bei gelösten Gewindestiften die Abtriebsnabe in der Antriebsdrehrichtung der Kupplung gedreht werden kann, so dass der Drehwinkel zwischen dem Nocken und der Abtriebsnabe bis zum Erreichen der gewünschten Stellung verändert werden kann, worauf die Gewindestifte wieder festgezogen werden. Man verdreht demnach die beispielsweise eine Kurvenscheibe tragende Abtriebsnabe gegenüber der in der Anschlagsstellung befindlichen Nockenhülse, deren Nocken gegen den Betätigungshebel beispielsweise eines Hubmagneten anliegt. Diese bekannte Lösung besitzt den Nachteil, dass man für die Einstellung Werkzeuge benötigt und dass insbesondere die Gewindestifte des Einstellringes im eingebauten Zustand der Kupplung häufig nur schwer zugänglich sind.

Eine weitere bekannte Lösung der Aufgabe, die Nockenhülse bezüglich der Abtriebsnabe einstellen zu können, besteht darin, eine zweiteilige Nockenhülse zu verwenden, die aus einem Innenring und einem koaxial angeordneten Aussenring besteht, die an ihren gegeneinander liegenden Flächen eine Feinverzahnung aufweisen, so dass der den Nocken aufweisende Aussenring in axialer Richtung abgezogen und im gewünschten Ausmass verdreht auf den Innenring wieder aufgeschoben werden kann, wobei natürlich aufgrund der Verzahnung zwischen dem Innenring und dem Aussenring nur eine stufenweise Veränderung der Drehstellung möglich ist. Bei dieser Ausführungsform ist die Schlingfeder der Schlingfeder-Kupplung mit dem einen Ende am die Schlingfeder umschliessenden Innenring formschlüssig fixiert und mit dem anderen Federende an der Abtriebsnabe formschlüssig festgehalten. Der Nachteil dieser bekannten Lösung besteht darin, dass keine stufenlose Verstellung möglich ist und dass die Feinverzahnung zwischen dem Innenring und dem Aussenring der zweiteiligen Nockenhülse bei einer zu hohen Belastung beschädigt werden kann. Auch hier sind Werkzeuge für die Verstellung des Aussenringes gegenüber dem Innenring notwendig, auf welchem der Aussenring beispielsweise durch einen zwecks Verstellung zu entfernenden und wieder einzusetzenden Sicherungsring gehalten ist.

Die der Erfindung zugrunde liegende Aufgabe bestand daher darin, eine Schlingfeder-Kupplung derart auszugestalten, dass eine Drehverstellung des zum Ein- und Auskuppeln dienenden Nokkens ohne Gebrauch eines Werkzeuges, dessen Einsatz häufig wegen der schlecht zugänglichen, mittels des Werkzeuges zu betätigenden Befestigungsmittel erschwert ist, und ferner in stufenloser Weise um beliebige Drehwinkel möglich ist. Diese Aufgabe wird durch die im Anspruch 1 angeführten Massnahmen gelöst.

Durch die Verwendung einer weiteren Schlingfeder zwischen der inneren Hülse und der äusseren Hülse, kann letztere in der Antriebsdrehrichtung der Kupplung wie ein Freilauf um beliebige Drehwinkel weitergedreht werden, ist aber in der entgegengesetzen Drehrichtung blockiert, wenn der Nocken gegen den in die Umlaufbahn des Nockens gebrachten Anschlaghebel anfährt und dadurch auf den Nocken eine Kraft in der zur Antriebsdrehrichtung entgegengesetzten Drehrichtung einwirkt, wobei dann die äussere Hülse mit der inneren Hülse reibungsschlüssig gekuppelt ist, um über die innere Hülse die Schlingfeder-Kupplung auszukuppeln. Das Einkuppeln geschieht durch Freigabe der mit dem Nocken versehenen äusseren Hülse bei Wegschwenken oder Zurückfahren des Anschlaghebels. Der besondere Vorteil dieser Ausgestaltung besteht darin, dass die äussere Hülse stufenlos um jeden beliebigen Drehwinkel verstellt werden kann.

Die erfindungsgemässe Lösung besitzt ferner den Vorteil, dass der bei bisher bekannten Ausführungsformen derartiger Schlingfeder-Kupplungen verwendete Einstellring entfällt, der mittels Gewindestiften auf der Abtriebsnabe festgehalten ist. Die Gewindestifte sind nämlich häufig wegen aussen an die Kupplung anschliessender anderer Bauelemente schwer zugänglich, insbesondere bei Ausführungsformen, bei denen die Kupplungs-Schlingfeder ausser durch die Nockenhülse auch noch von einer Bremsnabe umschlossen ist, gegen welche die Schlingfeder bei ihrer Expansion angedrückt wird, um die Kupplung abtriebsseitig zu stoppen. Die Bremsnabe muss daher festgehalten sein, zu welchem Zweck sie beispielsweise mittels aussen axparallel angeordneter Bolzen mit einer Befestigungsplatte verbunden ist, in welcher die ganze Schlingfeder-Kupplung gelagert ist. Die Befestigungsplatte dient meist dazu, die Schlingfeder-Kupplung mit der Betätigungsvorrichtung, die beispielsweise aus einem elektrischen Hubmagneten besteht, zu einer Baueinheit zusammenzufassen, wobei der Hubmagnet auch an der zur Lagerung der Schlingfeder-Kupplung dienenden Befestigungsplatte befestigt ist.

Aus der CH-A-619 758 ist eine derartige Anordnung bekannt, bei der an einer zur Lagerung der Schlingfeder-Kupplung dienenden Befestigungsplatte auch die Betätigungsvorrichtung befestigt ist, durch die die Nockenhülse der Schlingfeder-Kupplung festgehalten oder freigegeben wird. Bei dieser bekannten Einrichtung befindet sich der Einstellring der Schlingfeder-Kupplung zwischen der Befestigungsplatte und einem parallel dazu angeordneten und die Bremsnabe festhaltenden Schenkel eines an der Befestigungsplatte befestigten Bügels, der den Hubmagneten trägt. Die Gewindestifte des Einstellringes sind daher nicht in jeder Drehstellung gut zugänglich. Bei anderen bekannten Ausführungsformen sind die oben bereits erwähnten Bolzen zum Festhalten der Bremsnabe hinderlich, wenn der Einstellring verstellt werden soll. Häufig besitzen derartige Schlingfeder-Kupplungen wie beispielsweise die in der vorstehend erwähnten Schweizer Patentschrift beschriebene Ausführungsform ausser der Bremsnabe auch noch eine Rücklaufsperrfeder, die das Zurückdrehen der Abtriebsnabe verhindert, sowie eine weitere Vorlaufsperrfeder, die ein Überholen des Antriebes durch die an der Abtriebsnabe wirksame Last verhindert.

Die erfindungsgemässe Lösung ist nun bei derartigen Ausführungsformen einer Schlingfeder-Kupplung besonders vorteilhaft, weil durch den Wegfall des Einstellringes die Baulänge der Kupplung kleiner sein kann und weil die Bremsnabe unmittelbar an der Befestigungsplatte befestigt werden kann. In zweckmässiger Ausgestaltung kann dann eine mit der Befestigungsplatte unmittelbar verbundene und stufenförmig abgesetzte Bremsnabe als Lagerung für die Abtriebsnabe der Kupplung dienen.

Die Erfindung wird nachfolgend anhand der Zeichnungen näher erläutert. Es zeigen:

Fig. 1 einen Axialschnitt durch eine erste Ausführungsform der Schlingfeder-Kupplung;

Fig. 2 eine Ansicht der Kupplung in Axialrichtung gesehen;

Fig. 3 einen Axialschnitt durch eine abgewandelte Ausführungsform, bei der die in einer Befestigungsplatte gelagerte Kupplung und eine Betätigungsvorrichtung eine Baueinheit bilden;

Fig. 4 eine Ansicht der Ausführungsform gemäss Fig. 3 in Axialrichtung gesehen;

Fig. 5 einen Axialschnitt durch eine weiter abgewandelte Ausführungsform ähnlich wie Fig. 3 mit einer zusätzlichen Bremsnabe.

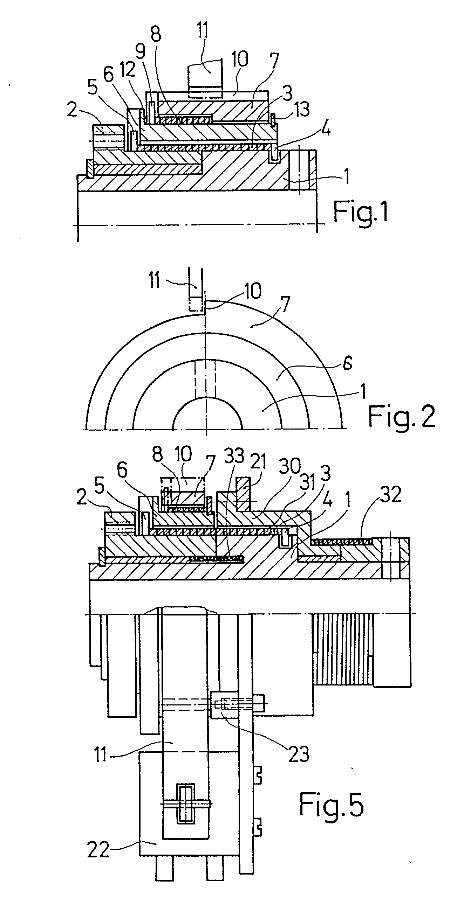

Die Ausführungsform der Schlingfeder-Kupplung gemäss Fig. 1 und 2 weist eine Abtriebsnabe 1 auf, auf deren abgesetztem Teil eine Antriebsnabe 2 drehbar gelagert ist. Auf den in Axialrichtung hintereinander liegenden und den gleichen Aussendurchmesser aufweisenden Abschnitten der Abtriebsnabe 1 und der Antriebsnabe 2 ist eine Kupplungs-Schlingfeder 3 angeordnet. Die Schlingfeder 3 ist mit einem radial nach innen gebogenen Ende 4 in der Abtriebsnabe 1 formschlüssig eingehängt. Das andere Ende 5 der Schlingfeder 3 ist radial nach aussen gebogen und formschlüssig am Ende der die Schlingfeder 3 umschliessenden inneren Hülse 6 des aus der inneren Hülse 6 und der koaxial dazu angeordneten äusseren Hülse 7 bestehenden Schaltorgans gehalten. Zwischen der äusseren Hülse 7 und der inneren Hülse 6 des aus diesen beiden Hülsen bestehenden Schaltorgans ist eine weitere Schlingfeder 8 angeordnet, die mit Vorspannung auf der inneren Hülse 6 liegt. Das eine Ende 9 der weiteren Schlingfeder 8 ist mit dem Ende der äusseren Hülse 7 formschlüssig verbunden. Die äussere Hülse 7 weist am Umfang einen radialen Vorsprung oder Nocken 10 auf, der mit einem Hebel 11 oder Anschlag einer in der Zeichnung nicht dargestellten Betätigungsvorrichtung zusammenwirkt. Die weitere Schlingfeder 8 zwischen der inneren Hülse 6 und der äusseren Hülse 7 des Schaltorgans lässt es zu, dass die äussere Hülse 7 in der Antriebsdrehrichtung der Kupplung relativ zur inneren Hülse 5 gedreht werden kann, d.h. auf der inneren Hülse frei läuft, wobei die Antriebsdrehrichtung der Kupplung gemäss Fig. 2 entgegen dem Uhrzeigersinn gerichtet ist. Wenn jedoch die äussere Hülse 7 durch den in die Umlaufbahn des Nockens 10 gebrachten Hebel 11 angehalten wird, wird die äussere Hülse 7 mit der inneren Hülse 6 durch die weitere Schlingfeder 8 reibungsschlüssig gekuppelt, so dass das aus den beiden Hülsen bestehende Schaltorgan auf die Kupplungs-Schlingfeder 3 einwirkt und durch Expansion der Schlingfeder das Auskuppeln herbeiführt.

Die äussere Hülse 7 ist durch einen Bund 12 am einen Ende der inneren Hülse und durch einen Sicherungsring 13 am anderen Ende der inneren Hülse auf letzterer gehalten.

Die mit der Erfindung zu lösende Aufgabe, eine Veränderung der Drehstellung des Nockens 10 relativ zur Abtriebsnabe 1 herbeizuführen, lässt sich in einfacher Weise dadurch erreichen, dass man die Abtriebsnabe 1 in der gewünschten Lage festhält, in welcher ein in der Zeichnung nicht dargestelltes, durch die Kupplung angetriebenes Maschinenelement ausgekuppelt werden soll, und dass man die in dieser Lage der Abtriebsnabe nicht in der Anschlagsstellung an dem Hebel 11 mit dem Nocken 10 anliegende äussere Hülse 7 in der Antriebsrichtung der Kupplung soweit verdreht, bis die Anschlagsstellung erreicht ist.

Wenn die im Betrieb stehende Kupplung ausschalten soll, wird die weitere Schlingfeder 8 beim Auftreffen des Nockens 10 gegen den Hebel 11 entgegengesetzt der Freilaufrichtung beansprucht und kann sich daher aufgrund des Seilreibungseffektes nicht verschieben.

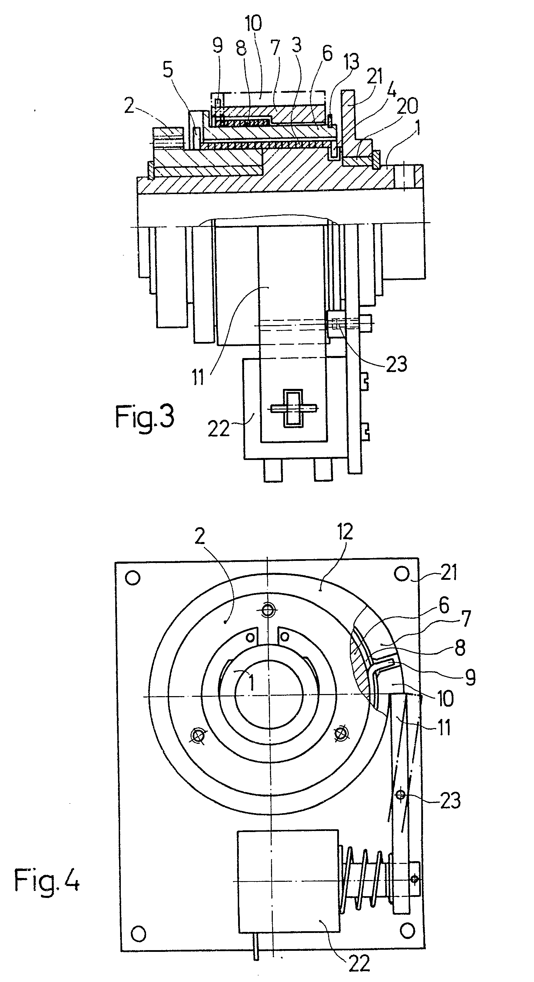

Die Ausführungsform gemäss Fig. 3 und 4 unterscheidet sich von der vorbeschriebenen Ausführungsform nur dadurch, dass die Schlingfeder-Kupplung mit einer Betätigungsvorrichtung zum Blockieren und zum Freigeben der Nockenhülse 7 zu einer Baueinheit zusammengebaut ist. Zu diesem Zweck ist die Abtriebsnabe 1 der Kupplung mittels einer Lagerbuchse 20 in einer Befestigungsplatte 21 drehbar gelagert. An dieser Befestigungsplatte ist auch ein Hubmagnet 22 befestigt, welcher den mit der äusseren Hülse 7 des Schaltorgans zusammenwirkenden Anschlaghebel 11 um eine Schwenkachse 23 hin und her schwenkt, so dass der in Fig. 4 in ausgezogenen Linien dargestellte Hebel 11 sich in der Anschlagsposition befindet, in welcher durch Anschlag des Nockens 10 gegen den Hebel 11 die äussere Hülse 7 des Schaltorgans festgehalten wird, oder der in Fig. 4 in strichpunktierten Linien dargestellte Hebel 11 sich in der weggeschwenkten Stellung befindet, so dass die äussere Hülse freigegeben wird. Dabei ist die Antriebsdrehrichtung der Kupplung gemäss Fig. 4 im Uhrzeigersinn. Im übrigen gelten bezüglich der Veränderung der Nockendrehstellung relativ zur Abtriebsnabe die bezüglich der Ausführungsform gemäss Fig. 1 und 2 gemachten Erläuterungen. Für das Ein- und Ausschalten der Kupplung bei einer bestimmten Stellung der Abtriebsnabe 1 kann die äussere Hülse 7 um beliebige Winkel im Uhrzeigersinn weitergedreht werden.

Eine weitere Ausführungsvariante der Schlingfeder-Kupplung gemäss Fig. 5 weist zusätzlich noch eine Bremsnabe 30 auf, die dazu dient, das Lastmoment aufzunehmen. In diesem Fall wird die Kupplungs-Schlingfeder 3 sowohl als Kupplungsfeder als auch Bremsfeder verwendet. Die Bremswirkung kommt dabei durch die Expansion der Schlingfeder zustande, sobald die äussere Hülse 7 des Schaltorgans mit dem Nocken 10 gegen den Anschlaghebel 11 anfährt. Um beide Funktionen zu erfüllen, wird die Schlingfeder 3 von der inneren Hülse 6 des Schaltorgans 6, 7 wie auch von der in axialer Richtung anschliessenden Bremsnabe 30 umschlossen, weshalb bei dieser Ausführungsform die innere Hülse 6 und die äussere Hülse 7 kürzer als bei den zuvor beschriebenen Ausführungsformen sind. Zwischen der Schlingfeder 3 und der Bremsnabe 30 ist ein radiales Spiel 31 vorhanden, das so klein gewählt ist, dass beim Auskuppeln der Abtriebsnabe 1 die an diese Abtriebsnabe wirksame Masse die Schlingfeder 3 so weit öffnet, dass sie mit der Bremsnabe 30 in Berührung kommt und eine Abbremsung der Abtriebsnabe 1 bewirkt.

Durch das Öffnen der Schlingfeder 3 beim Auskuppeln und Abbremsen entsteht augenblicklich auch eine Schliesskraft in umgekehrter Richtung, die die Abtriebsnabe 1 so weit zurückzudrehen bestrebt ist, bis die Schlingfeder 3 wieder am Aussendurchmesser der Antriebsnabe 2 und der Abtriebsnabe 1 anliegt. Weil durch diesen Vorgang die gewünschte genaue Position der Abtriebsnabe 1 nicht eingehalten werden könnte, muss das Zurückdrehen der Abtriebsnabe 1 verhindert werden, zu welchem Zweck eine zusätzliche Schlingfeder 32 mit der Wirkung einer Rücklaufsperre mit der Hälfte Ihrer Länge aussen auf der Abtriebsnabe 1 und mit der anderen Hälfte aussen auf einem zylindrischen Endabschnitt der Bremsnabe 30 angeordnet ist.

Der Fortfall des bei bekannten Kupplungen dieser Art vorhandenen Einstellringes ermöglicht die gedrängte Bauweise der Schlingfeder-Kupplung gemäss Fig. 5, wobei die Bremsnabe 30 stufenförmig abgesetzt mit Abschnitten verschieden grossen Durchmessers ausgebildet ist, wobei der den grösseren Durchmesser aufweisende Abschnitt der Bremsnabe 30 mit der Befestigungsplatte 21 unmittelbar verbunden ist und in dem zylindrischen Endabschnitt der Bremsnabe mit dem kleineren Durchmesser die Abtriebsnabe 1 drehbar gelagert ist und wobei dieser Endabschnitt der Bremsnabe 30 auch noch zur Anordnung der Rücklaufsperre dient.

Die Schlingfeder-Kupplung gemäss Fig. 5 weist ausserdem in an sich bekannter Weise auch noch eine Vorlaufsperrfeder 33 auf, die verhindern soll, dass die Abtriebsnabe 1 die Antriebsnabe 2 überholt, beispielsweise wenn ein Kurbeltrieb oder eine Kurvenscheibe durch die Kupplung angetrieben wird.

Die Betätigungsvorrichtung mit einem Hubmagneten 22 zur Schwenkbetätigung des Hebels 11 ist im übrigen bei dieser Ausführungsform gleich ausgebildet wie bei der Ausführungsform der Kupplung gemäss Fig. 3 und 4.

Eine im Zusammenhang mit der Ausführungsform gemäss Fig. 5 beschriebene Rücklaufsperrfeder und/oder Vorlaufsperrfeder kann natürlich auch bei den anderen Ausführungsbeispielen vorgesehen werden.

**Patentansprüche**

1. Schlingfeder-Kupplung mit einer Antriebsnabe (2) und einer Abtriebsnabe (1) und einer koaxial zur Antriebsnabe und zur Abtriebsnabe in zur Drehmomentübertragung geeigneten Weise angeordneten Schlingfeder (3) sowie mit einem mehrteiligen Schaltorgan (6, 7, 8), welches eine die Kupplungs-Schlingfeder (3) umschliessende und mit deren einem Federende (5) formschlüssig verbundene innere Hülse (6), eine auf der Hülse (6) angeordnete weitere Schlingfeder (8) und eine mit deren Federende (9) formschlüssig verbundene äussere Hülse (7) aufweist, die einen zum Zusammenwirken mit einem beweglichen Anschlaghebel (11) bestimmten Nocken (10) aufweist, dadurch gekennzeichnet, dass die Schlingfeder-Kupplung eine Ausschaltkupplung ist, in der ein anderes Ende (4) der Schlingfeder (3) formschlüssig in die Abtriebsnabe (1) eingreift und in der bei Drehung der äusseren Hülse (7) des Schaltorgans (6, 7, 8) in Antriebsrichtung die weitere Schlingfeder (8) aufgrund ihres Windungssinns Freilauf zwischen innerer und äusserer Hülse (6, 7) gewährt, wodurch die äussere Hülse (7) in eine relativ zur Abtriebsnabe (1) beliebige, zum Schalten der Kupplung geeignete Drehstellung einstellbar wird, und in der die weitere Schlingfeder (8) die äussere Hülse (7) in der zur Antriebsrichtung entgegengesetzten Drehrichtung mit der inneren Hülse (6) kraftschlüssig kuppelt, wodurch beim Auftreffen des Nockens (10) auf den Anschlaghebel (11) das Schaltorgan (6, 7, 8) die Schlingfeder (3) öffnet und damit die Kupplung ausschaltet.

2. Kupplung nach Anspruch 1, dadurch gekennzeichnet, dass das aus einer inneren Hülse (6), einer äusseren Hülse (7) und einer Feder (8) bestehende Schaltorgan (6, 7, 8) in axialer Richtung anschliessend an eine Befestigungsplatte (21) für die drehbare Lagerung der Abtriebsnabe (1) angeordnet ist.

3. Kupplung nach Anspruch 1, bei der eine Teillänge der Kupplungs-Schlingfeder (3) von einer zusätzlichen drehfest angeordneten Bremsnabe (30) umschlossen ist, dadurch gekennzeichnet, dass die Bremsnabe (30) unmittelbar an einer als Lagerträger für die Schlingfeder-Kupplung dienenden Befestigungsplatte (21) befestigt ist, an der auch eine Betätigungsvorrichtung (11, 22, 23) zur Betätigung des mit dem Nocken (10) des Schaltorgans (6, 7, 8) der Kupplung zusammenwirkenden Betätigungshebels (11) befestigt ist.

4. Kupplung nach Anspruch 3, dadurch gekennzeichnet, dass die Bremsnabe (30) stufenförmig abgesetzt mit Abschnitten verschieden grossen Durchmessers ausgebildet ist, dass der den grösseren Durchmesser aufweisende Abschnitt der Bremsnabe (30) mit der Befestigungsplatte (21) fest verbunden ist und in einem zylindrischen Endabschnitt der Bremsnabe mit kleinerem Durchmesser die Abtriebsnabe (1) der Kupplung drehbar gelagert ist.

5. Kupplung nach Anspruch 4, dadurch gekennzeichnet, dass auf dem zur Lagerung der Abtriebsnabe (1) der Kupplung dienende zylindrischen Endabschnitt der Bremsnabe (30) und auf einem in axialer Richtung anschliessenden und einen gleich grossen Aussendurchmesser wie die Bremsnabe aufweisenden Abschnitt der Abtriebsnabe (1) eine zusätzliche Schlingfeder (32) als Rücklaufsperre zur Verhinderung des Rückdrehens der Abtriebsnabe (1) angeordnet ist.

**Revendications**

1. Accouplement à ressort enroulé avec un moyeu d'entraînement (2) et un moyeu entraîné (1) et un ressort enroulé (3) disposé coaxialement au moyeu d'entraînement et au moyeu entraîné de façon à permettre la transmission du couple de rotation ainsi qu'avec un organe de couplage en plusieurs parties (6, 7, 8), lequel présente une gaine interne (6) qui entoure le ressort enroulé d'accouplement (3) et qui est reliée par assemblage de forme avec l'une des extrémités (5) du ressort, un autre ressort enroulé (8) disposé sur la gaine (6) et une gaine externe (7) reliée par assemblage de forme avec l'une des extrémités (9) du ressort, cette gaine présentant un ergot (10) destiné à coopérer avec un levier d'arrêt (11) mobile, caractérisé en ce que l'accouplement à ressort enroulé est un accouplement de désembrayage dans lequel une autre extrémité (4) du ressort enroulé (3) vient en prise par assemblage de forme dans le moyeu entraîné (1) et dans lequel, par rotation de la gaine externe (7) de l'organe de couplage (6, 7, 8) dans le sens de l'entraînement, l'autre ressort enroulé (8) assure une course libre entre les gaines interne et externe (6, 7) du fait de son sens d'enroulement, grâce à quoi la gaine externe (7) peut être réglée dans une position de rotation désirée par rapport au moyeu entraîné (1) en vue du raccordement de l'accouplement, et dans lequel l'autre ressort enroulé (8) accouple par assemblage par force la gaine externe (7) avec la gaine interne (6) dans le sens de rotation opposé au sens d'entraînement, ce par quoi, lors de la rencontre de l'ergot (10) sur le levier d'arrêt (11), l'organe de couplage (6, 7, 8) ouvre le ressort enroulé (3) et désembraye ainsi l'accouplement.

2. Accouplement selon la revendication 1, caractérisé en ce que l'organe de couplage (6, 7, 8) qui consiste en une gaine interne (6) en une gaine externe (7) et en un ressort (8) est disposé en direction axiale à proximité d'une plaque de fixation (21) pour le logement du moyeu entraîné (1) avec possibilité de rotation.

3. Accouplement selon la revendication 1, dans lequel une fraction de la longueur du ressort enroulé d'accouplement (3) est entourée par un moyeu de freinage (30) supplémentaire solidaire en rotation, caractérisé en ce que le moyeu de freinage (30) est fixé immédiatement sur une plaque de fixation (21) qui sert de support de logement pour l'accouplement à ressort enroulé, à laquelle est également fixé un dispositif d'entraînement (11, 22, 23) pour l'actionnement du levier d'entraînement (11) qui coopère avec l'ergot (10) de l'organe de couplage (6, 7, 8) de l'accouplement.

4. Accouplement selon la revendication 3, caractérisé en ce que le moyeu de freinage (30) est décalé par étage avec des sections de différents diamètres, en ce que la section de plus grand diamètre du moyeu de freinage (30) est reliée de façon fixe à la plaque de fixation (21) et en ce que le moyeu entraîné (1) de l'accouplement est logé de façon à pouvoir tourner dans une section terminale cylindrique du moyeu de freinage de diamètre plus petit.

5. Accouplement selon la revendication 4, caractérisé en ce qu'un ressort enroulé (32) supplémentaire servant d'anti-retour pour empêcher la rotation en sens inverse du moyeu entraîné (1) est disposé sur la section terminale cylindrique du moyeu de freinage (30) qui sert à loger le moyeu entraîné (1) de l'accouplement et sur une section du moyeu entraîné (1) qui se raccorde en direction axiale et qui présente le même diamètre extérieur que le moyeu de freinage.

**Claims**

1. A helical spring coupling with a driving hub (2) and a driven hub (1) and a helical spring (3) co-axial with the driving hub and the driven hub arranged suitably for torque transmission as well as a multi-part switching device (6, 7, 8) which has an internal sleeve (6) surrounding the helical spring (3) of the coupling and which is connected in a dove-tailing manner with one of the ends (5) of the spring, a further helical spring (8) arranged on the sleeve (6), and an outer sleeve (7) which is connected in a dove-tailing manner with the spring end (9) of the further helical spring (8), and which has a cam (10) serving for co-operation with a displaceable abutment lever (11), characterised in that the helical spring coupling is a disengagement coupling, wherein another end (4) of the helical spring (3) engages in a dove-tailing manner into the driven hub (1) and wherein on rotation of the outer sleeve (7) of the switching device (6, 7, 8) in the driving direction the further helical spring (8) assures overrunning, due to its direction of winding, between the internal and external sleeves (6, 7), whereby the outer sleeve (7) is rendered settable relative to the driven hub (1) in any desired rotary position suitable for switching the coupling, and wherein the further helical spring (8) positively couples the outer sleeve (7) with the internal sleeve (6) in the direction of rotation opposite to the driving direction, whereby on engagement of the cam (10) with the abutment lever (11) of the switching device (6, 7, 8) the helical spring (3) opens and thus disengages the coupling.

2. Coupling according to claim 1, characterised in that the switching device (6, 7, 8) consisting of an inner sleeve (6), an outer sleeve (7) and a spring (8) is arranged in the axial direction adjacently to a securing plate (21) for the rotatable journalling of the driven hub (1).

3. Coupling according to claim 1, in which a part of the length of the helical spring coupling is surrounded by an additional braking hub (30) arranged fast against rotation, characterised in that the braking hub (30) is secured directly at a securing plate (21) serving as the journal carrier for the helical spring coupling, and an actuating device (11, 22, 23) for actuating the actuating lever (11) co-operating with the cam (10) of the switching device (6, 7, 8) of the coupling is also secured at the securing plate (21).

4. Coupling according to claim 3, characterised in that the braking hub (30) is of stepwise offset construction having sections of varying diameters, and in that the section of the braking hub (30) having the larger diameter is secured fast to the securing plate (21) and the driven hub (1) of the coupling is rotatably journalled in a cylindrical end section of the braking hub with the smaller diameter.

5. Coupling according to claim 4, characterised in that an additional helical spring (32) serving as a return stop for prevention of the reverse rotation of the driven hub (1) is arranged on the cylindrical end section of the braking hub (30), the end section serving for journalling the driven hub (1) of the coupling as well as on an axially adjacent section of the driven hub (1) which has an outer diameter equal to that of the braking hub.

Fig.1

Fig.2

Fig.5

Fig.3

Fig.4